# EUROPÄISCHE PATENTANMELDUNG

(11) **EP 4 335 621 A1**
(43) Veröffentlichungstag der Anmeldung: **13.03.2024**
(21) Anmeldenummer: 23193442.3
(22) Anmeldetag: 25.08.2023
(51) Int. Cl.: B29C 49/64, B29C 49/68, B29C 49/78, B29C 49/06, B29C 49/42, B29L 31/00

(54) **DETEKTIEREN VERLORENER KUNSTSTOFFVORFORMLINGE IM HEIZMODUL DURCH MULTIPLE HEIZLAMPENAUSFALLERKENNUNG**

(30) Priorität: 06.09.2022 DE 102022122633
(71) Anmelder: Krones AG, 93073 Neutraubling (DE)
(72) Erfinder: Vogler, Daniel, 93073 Neutraubling (DE); Eifler, Michael, 93073 Neutraubling (DE); Philipp, Thomas, 93073 Neutraubling (DE); Pense, Andreas, 93073 Neutraubling (DE); Moewes, Simon, 93073 Neutraubling (DE); Roth, Andreas, 93073 Neutraubling (DE); Schoenberger, Wolfgang, 93073 Neutraubling (DE); Aust, Robert, 93073 Neutraubling (DE); Forsthövel, Jochen, 93073 Neutraubling (DE); Peter, Daniel, 93073 Neutraubling (DE)
(74) Vertreter: Bittner, Bernhard

(57) **Zusammenfassung**

Vorrichtung (1) zum Erwärmen von Kunststoffvorformlingen (10) mit einer Transporteinrichtung (2), welche die Kunststoffvorformlinge entlang eines vorgegebenen Transportpfads transportiert, wobei die Transporteinrichtung ein umlaufendes Transportmittel (16) und eine Vielzahl von Halteeinrichtungen (18) zum Halten der Kunststoffvorformlinge aufweist, mit einer Vielzahl von Heizeinrichtungen (4), welche stationär entlang des Transportpfads (P) angeordnet sind, derart dass die entlang des Transportpfads transportierten Kunststoffvorformlinge durch diese Heizeinrichtungen (4) erwärmt werden, wobei die Heizeinrichtungen jeweils eine Vielzahl von Heizlampen (44) aufweisen, und die Vorrichtung (1) eine Erkennungseinrichtung (6) aufweist, welche dazu geeignet und bestimmt ist, einen Ausfall der Heizlampen (44) zu erfassen dadurch gekennzeichnet, dass die Vorrichtung eine Steuerungseinrichtung (12) aufweist, welche dazu geeignet ist, die Vorrichtung in Abhängigkeit von einer Anzahl als ausgefallen erfasster Heizlampen (44) zu steuern.

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei ist es bekannt, dass zunächst Kunststoffvorformlinge erwärmt werden und anschließend diese erwärmten Kunststoffvorformlinge zu den Kunststoffbehältnissen umgeformt werden, beispielsweise mittels einer Streckblasmaschine. Während des Aufheizvorgangs in der Erwärmungsvorrichtung sind die Kunststoffvorformlinge mit ihrer Mündung auf Heizdorne aufgesteckt und werden an stehenden bzw. stationären Heizkästen bzw. Heizeinrichtung entlanggefahren und dabei bevorzugt um ihre Mittelachse gedreht, um über den Umfang gleichmäßig erwärmt zu werden.

Dabei kann es passieren, dass ein Kunststoffvorformling von dem Heizdorn herabrutscht und in eine Ofengasse fällt. Dort kann er dann mit nachfolgenden Kunststoffvorformlingen kollidieren und verschmelzen und einen regelrechten Klumpen bilden und auf diese Weise einen großen Maschinenschaden verursachen. So kann es zu einer Brandgefahr, zu einem Zerbrechen von Heizlampen und zu einer Beschädigung von Komponenten der Ofengasse kommen. Daneben kann es auch zu einem verbiegen der Heizdorne und der Abschirmplatten kommen.

Im Stand der Technik ist es bekannt, ein Herabfallen derartiger Kunststoffvorformlinge erst innerhalb des Blasmoduls bzw. an einer Einlauflichtschranke zu dem Blasrad zu erkennen. Im Stand der Technik kann während des gesamten Heizvorgangs ein verloren gegangener Kunststoffvorformling nicht direkt detektiert werden. Dies geschieht erst später im Blasmodul bzw. an der Einlauflichtschranke, was unter Umständen 20 Sek. Zeitverzögerungen nach sich zieht.

Diese Problematik hat sich in jüngerer Zeit auch dadurch verschärft dass man bestrebt ist, die Heizgassen immer enger zu gestalten und man auch die Bodenreflektoren immer näher an die Kunststoffvorformlinge heranführt, um die Energieausbeute zu steigern.

Der vorliegenden Erfindung liegt daher die Aufgabe zugrunde, ein möglichst schnelles Erfassen eines Herabfallens von Kunststoffvorformlingen zu erkennen, um auf diese Weise größere Schäden an dem Heizmodul zu verhindern. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung auf, welche die Kunststoffvorformlinge entlang eines vorgegebenen Transportpfads transportiert. Dabei weist die Transporteinrichtung ein umlaufendes Transportmittel und eine Vielzahl von Halteeinrichtungen zum Halten der Kunststoffvorformlinge auf (wobei diese Halteeinrichtungen bevorzugt an dem umlaufenden Transportmittel angeordnet sind).

Daneben ist eine Vielzahl von Heizeinrichtungen vorgesehen, welche stationär entlang des Transportpfads der Kunststoffvorformlinge angeordnet sind derart, dass die entlang des Transportpfads transportierten Kunststoffvorformlinge durch diese Heizeinrichtung und insbesondere durch von diesen Heizeinrichtungen ausgehende Infrarotstrahlung erwärmt werden. Dabei weisen die Heizeinrichtungen jeweils eine Vielzahl von Heizlampen auf und die Vorrichtung weist eine Erkennungseinrichtung auf welche dazu geeignet und bestimmt ist einen Ausfall der Heizlampen zu erfassen.

Erfindungsgemäß weist die Vorrichtung eine Steuerungseinrichtung auf, welche dazu geeignet ist, in Abhängigkeit von einer Anzahl der ausgefallenen erfassten Heizlampen die Vorrichtung zu steuern.

Ein in der Heizeinrichtung verlorener Kunststoffvorformling (oder Verklumpungen von benachbarten Preformen etwa durch Taumenschlag) verursachen oft auch Kollisionen innerhalb der Ofengasse, wobei mehrere Heizlampen zu Bruch gehen. Die Erfindung schlägt vor, das Erkennen mehrerer gebrochener Heizlampen während der Produktion zum Steuern der Vorrichtung zu verwenden. Wie unten genauer beschrieben, kann in diesem Fall ein Notstopp ausgelöst werden und damit ein noch größerer Schaden an der Maschine verhindert werden.

Es wird daher vorgeschlagen, nicht nur einen Ausfall einer Heizlampe zu erkennen, sondern auch eine Anzahl von Ausfällen und insbesondere eine Anzahl von Ausfällen in einem bestimmten Zeitinterval.

Besonders bevorzugt weist jede Heizeinrichtung mehrere Heizlampen auf, die insbesondere in einer vertikalen Richtung oder einer Längsrichtung der zu erwärmenden Kunststoffvorformlinge übereinander angeordnet sind.

Besonders bevorzugt kann auch erfasst werden, welche konkrete Heizlampe ausgefallen ist. Besonders bevorzugt erstreckt sich die Heizlampe in der Transportrichtung der Kunststoffvorformlinge.

Besonders bevorzugt weist die Vorrichtung eine Dreheinrichtung auf, welche die Kunststoffvorformlinge während ihres Transports bezüglich ihrer Längsrichtung dreht. Bevorzugt bewirkt dabei diese Dreheinrichtung eine einheitliche Drehung aller zu erwärmenden Kunststoffvorformlinge.

Bei einer weiteren bevorzugten Ausführungsform weist die Vorrichtung eine Erfassungseinrichtung auf, welche einen zeitlichen Abstand zwischen den Ausfällen wenigstens zweier Heizlampen erfasst.

So wäre es denkbar, dass zwei Heizlampen in einem vergleichsweise großen zeitlichen Abstand ausfallen, was dann nicht auf einen herabgefallenen Kunststoffvorformling schließen lässt, sondern ggf. auf einen "gewöhnlichen" (d.h. insbesondere nicht durch eine Kollision verursachten) Ausfall der Lampen.

Weiterhin kann auch berücksichtigt werden, an welchen Positionen Heizlampen ausgefallen sind. Wenn beispielsweise zunächst eine entlang des Transportpfads frühere Heizlampe ausfällt und danach eine entlang des Transportpfads spätere Heizlampe lässt dies eher auf ein Herabfallen eines Kunststoffvorformlings schließen, als wenn zunächst eine entlang des Transportpfads weiter vorgerückte Heizlampe und anschließend eine frühere Heizlampe ausfällt.

Bei einer bevorzugten Ausführungsform weist die Vorrichtung ein ersten Heizgasse auf, durch welche die Kunststoffvorformlinge während ihrer Erwärmung transportiert werden oder transportierbar sind. Besonders bevorzugt weist die Vorrichtung eine zweite Heizgasse auf, durch welche die Kunststoffvorformlinge in der entgegengesetzten Richtung transportiert werden. Besonders bevorzugt befindet sich zwischen der ersten Heizgasse und der zweiten Heizgasse ein Umlenkbereich, in dem eine Bewegungsrichtung der Kunststoffvorformlinge umgekehrt wird.

Bei einer weiteren bevorzugten Ausführungsform ist eine Vielzahl der Heizlampen an einer Seite der Heizgasse angeordnet. Besonders bevorzugt ist an der gegenüberliegenden Seite der Heizgasse wenigstens eine Reflektoreinrichtung angeordnet, welche infrarote Strahlung reflektiert.

Bei einer weiteren bevorzugten Ausführungsform ist in der Heizgasse eine Vielzahl von Reflektoreinrichtungen angeordnet ist, welche dazu geeignet und bestimmt sind, Wärmestrahlung zu reflektieren, wobei bevorzugt auch Bodenreflektoreinrichtungen vorgesehen sind, welche unterhalb des zu transportierenden Kunststoffvorformlinge angeordnet sind.

Bei einer weiteren vorteilhaften Ausführungsform weisen die Bodenreflektoreinrichtungen wenigstens abschnittsweise einen von einem horizontalen Verlauf abweichenden Verlauf aufweisen.

Diese Ausgestaltung dient insbesondere dazu, die Heizgasse möglichst klein auszubilden, um so die Erwärmung der Kunststoffvorformlinge energieeffizienter zu gestalten. Allerdings bring diese Vorgehensweise auch den Nachteil mit sich, dass herabfallende Kunststoffvorformlinge noch schneller zu Schäden an der Erwärmungseinrichtung führen können, da Kollisionen leichter auftreten.

Im Stand der Technik erfolgt die Erwärmung der Kunststoffvorformlinge zumeist mit flachen Bodenkacheln bzw. flachen Bodenreflektoren. Dies führt zu einer vergleichsweise niedrigen Effizienz der Erwärmungseinrichtung durch einen größeren Strahlungsraum in der Heizgasse (bedingt durch die flachen Bodenkacheln)

Daher wird der Strahlungsraum nur unzureichend auf die Größe der Kunststoffvorformlinge angepasst. Durch die hier beschriebene Ausgestaltung der Bodenreflektoren wird die Effizienz der Erwärmungseinrichtung erhöht.

Im Rahmen der Erfindung werden daher Bodenreflektoren bzw. Bodenkacheln vorgeschlagen, welche den nichtfunktionalen Totraum in der Heizgasse minimieren.

Bevorzugt ist der oben erwähnte Verlauf an der den Kunststoffvorformling zugewandten Oberfläche wenigstens abschnittsweise von einem geradlinigen Verlauf abweichend, beispielsweise gekrümmt ausgeführt.

Bevorzugt sind die Bodenreflektoreinrichtungen wenigstens abschnittsweise gekrümmt, (insbesondere sphärisch gekrümmt) oder (gegenüber einer horizontalen Richtung schräg verlaufenden ausgebildet.

Bevorzugt weisen die Bodenreflektoren jedoch auch abschnittsweise einen horizontalen Verlauf auf. Insbesondere weisen die Bodenreflektoren an einer den Heizlampen zugewandten Seite einen horizontalen Verlauf auf.

Bevorzugt ist die Kontur der Bodenreflektoren an der den Kunststoffvorformlingen zugewandten Oberfläche aus einer Gruppe von Konturen ausgewählt, welche sphärische Konturen, flach-sphärische Konturen, Kombinationen mehrerer ebener Fläche und dergleichen enthält.

Bevorzugt sind die Bodenreflektoren höhenverstellbar und insbesondere in einer Längsrichtung der Kunststoffvorformlinge verstellbar. Bei einer bevorzugten Ausführungsform sind die Bodenreflektoren bzw. die Bodenreflektoreinrichtungen insbesondere automatisch in Abhängigkeit von einer Anzahl der erfassten ausgefallenen Heizlampen der Vorrichtung steuerbar und/oder verstellbar und/oder verfahrbar. Hierbei ist es denkbar, dass für den Fall, dass mehrere Heizlampen ausgefallen sind und/oder ein Notstopp ausgelöst wird, die Bodenreflektoreinrichtungen automatisch in die tiefste Stellung gefahren werden. Es wäre auch denkbar, dass die Bodenreflektoreinrichtungen bereits beim Ausfall einer Heizlampe in die tiefste Stellung gefahren werden. Bevorzugt ist insbesondere durch einen Benutzer einstellbar, bei welcher Anzahl von ausgefallenen Heizlampen die Bodenreflektoreinrichtungen automatisch in die tiefste Stellung gefahren werden. Es wäre auch denkbar, dass bei einem Ausfallen eines oder mehrerer Heizlampen der Benutzer informiert wird und ein automatisches Herunterfahren in die tiefste Stellung bestätigen oder ablehnen muss.

Bei einer bevorzugten bzw. alternativen Ausführungsform sind die Bodenreflektoren bzw. die Bodenreflektoreinrichtungen schwenkbar angeordnet und können insbesondere aus dem Transportpfad der Kunststoffvorformlinge weggeschwenkt werden. Hierbei ist es denkbar, dass für den Fall, dass mehrere Heizlampen ausgefallen sind und ein Notstopp ausgelöst wird, die Bodenreflektoreinrichtungen automatisch aus dem Transportpfad der Kunststoffvorformlinge herausgeschwenkt bzw. weggeschwenkt werden und wodurch die Kunststoffformformline bevorzugt einfach aus dem Ofen herausfallen können, ohne dass sich ein Klumpen bildet oder ein weiterer Schaden verursacht wird.

Bei einer bevorzugten Ausführungsform sind die Bodenreflektoren bzw. die Bodenreflektoreinrichtungen bevorzugt automatisch in Abhängigkeit von einer Anzahl der erfassten ausgefallenen Heizlampen der Vorrichtung zumindest abschnittsweise verstellbar und/oder verfahrbar. Hierbei ist es denkbar, dass die Bodenreflektoreinrichtungen mehrteilig aufgebaut sind und nur bestimmte Abschnitte derselben automatisch oder manuell (veranlasst durch einen Benutzer der Anlage) heruntergefahren bzw. abgesenkt werden können. Bevorzugt können auf diese Weise einzelne Abschnitte heruntergefahren werden, in welchen eine oder mehrere ausgefallende Heizlampen erfasst wurden. Dies bietet den Vorteil, dass in einem Bereich, in welchem ausgefallene Heizlampen erfasst wurden, eine weitere Beschädigung des Ofens bzw. der Elemente des Ofens verhindert werden kann, aber in den restlichen Bereichen des Ofens die Kunststoffvorformlinge ungehindert weiter erwärmt und transportiert werden können.

Besonders bevorzugt weisen dabei die Bodenreflektoren einen Abstand zu den Bodenkuppen der zu erwärmenden Kunststoffvorformlinge auf, der geringer ist als 10mm, bevorzugt geringer als 8mm und besonders bevorzugt geringer als 5mm.

Bei einer weiteren bevorzugten Ausführungsform sind die Bodenreflektoren aus Keramik oder einem Metall hergestellt.

Bevorzugt weisen die Bodenreflektoren eine hohe Reflexion auf. Diese Reflexion kann dabei diffus (insbesondere bei Verwendung von Keramik) oder spekular (insbesondere bei der Verwendung von Metall) ausgebildet sein.

Bevorzugt wird eine optimierte Reflexion der infraroten Strahlung, insbesondere auf die Bodenbereiche der Kunststoffvorfomlinge d.h. insbesondere die Bodenkuppen durch eine Orientierung der Reflexionsfläche(n) der Bodenreflektoren zu den Kuppen der Kunststoffvorformlinge hin erreicht.

Besonders bevorzugt sind die Gegenreflektoren, welche an der bezüglich den Heizlampen gegenüberliegenden Seite der Heizgasse angeordnet sind, ebenfalls in ihrer Position hinsichtlich der Kunststoffvorformlinge verstellbar.

So kann die Position der Gegenreflektoren vorteilhaft an eine geometrische Gestalt der Kunststoffvorformlinge angepasst werden insbesondere an einen Durchmesser der Kunststoffvorformlinge. Dabei ist bevorzugt eine Antriebseinrichtung vorgesehen, um die Positionen dieser Gegenreflektoren zur verstellen. Es wäre jedoch auch eine manuelle Einstellung denkbar. Diese Einstellung kann dabei gestuft oder stufenlos erfolgen.

Bei einer weiteren bevorzugten Ausführungsform weisen die Bodenreflektoreinrichtungen einen ersten Abschnitt mit einem im Wesentlichen horizontalen Verlauf und einen zweiten Abschnitt mit dem von dem horizontalen Verlauf abweichenden Verlauf auf.

Bei einer bevorzugten Ausführungsform weist die Vorrichtung eine Sperreinrichtung auf, welche dazu geeignet und bestimmt ist, den Einlauf von Kunststoffvorformlingen in die Vorrichtung zu verhindern.

Besonders bevorzugt wird die Sperreinrichtung von einer Steuerungseinrichtung angesteuert, sobald von der Erkennungseinrichtung der Ausfall von mindestens einer Heizlampe erfasst wird

Bereits im internen Stand der Technik wurde bei Ausfall einer oder mehrerer Heizlampen die Preformsperre geschlossen und die Maschinen leer gefahren. Danach wurde in einen Haltebetrieb übergegangen. Ein durch einen heruntergefallenen Kunststoffvorformling entstandener Klumpen würde auf diese Weise durch die Heizgasse geschoben werden und könnte einen großen Maschinenschaden anrichten.

Bei einer bevorzugten Ausführungsform weist die Heizeinrichtung eine Vielzahl von (Heiz-) Zonen auf, welche sich bevorzugt entlang der Transportrichtung der Kunststoffvorformlinge erstrecken und unabhängig voneinander ansteuerbar und/oder betreibbar sind. Bevorzugt sind jeder (Heiz-) Zone wenigstens eine Heizlampe und bevorzugt eine Vielzahl von Heizlampen zugeordnet. Bevorzugt sind diejenigen Heizlampen, welcher einer (Heiz-)Zone zugeordnet sind, übereinander und bevorzugt in Längsrichtung der Kunststoffvorformline angeordnet. Hierbei ist es denkbar, dass in Abhängigkeit von einer Sorte der Kunststoffvorformlinge nicht alle (Heiz-)Zonen zur Erwärmung der Kunststoffvorformlinge verwendet werden oder nur mit reduzierter Leistung betrieben werden. Weither können einige Heizlampen und/oder (Heiz-)Zonen zumindest zeitweise in einem inaktiven Zustand vorliegen.

Bei einer bevorzugten Ausführungsform ist es möglich, dass beim Ausfall einer Heizlampe die Sperreinrichtung nicht unmittelbar angesteuert wird und insbesondere die Preformsperre nicht sofort geschlossen wird. Stattdessen wird vorgeschlagen, dass eine der ausgefallenen Heizlampe nachgeordnete (in der Transportrichtung der Kunststoffvorformlinge nachfolgende) (Heiz-)Zone bzw. (inaktive) Heizlampe angesteuert und/oder aktiviert wird. Dies bietet den Vorteil, dass die Heizleistung der ausgefallenen Heizlampe durch die zusätzlich aktivierte (Heiz-)Zone und/oder Heizlampe kompensiert werden kann. Es wäre auch denkbar, die Leistung einer nachfolgenden Heizlampe entsprechend zu erhöhen um den Ausfall der Heizlampe zu kompensieren.

Steht beispielsweise in derselben (Heiz-)Zone, in welcher der Ausfall einer Heizlampe erfasst wird, keine weitere inaktive Heizlampen zur Aktivierung zur Verfügung, so ist es denkbar, dass eine Heizlampe einer benachbarten (Heiz-)Zone, insbesondere einer in Transportrichtung der Kunststoffvorformlinge nachfolgenden (Heiz-)Zone aktiviert wird.

Bei einer bevorzugten Ausführungsform kann dem Benutzer über eine entsprechende Anzeige die ausgefallene Heizlampe sowie die zur Kompensation aktivierte Heizlampe visuell angezeigt werden und/oder der Benutzer kann akustisch oder visuell darüber informiert werden, dass eine Heizlampe ausgefallen ist und/oder stattdessen eine andere Heizlampe aktiviert wurde (inaktive Heizlampe) oder die Leistung einer bereits aktiven Heizlampe erhöht wurde.

Weiterhin ist es denkbar, dass eine solche Kompensation sortenabhängig aktivierbar und/oder deaktivierbar ist, zum Beispiel für den Fall, dass dies nicht erwünscht ist aufgrund hoher Qualitätsansprüche an die Flasche. Die vorgeschlagene Vorgehensweise bietet den Vorteil, dass beim Ausfall einer Heizlampe die Maschine nicht (sofort) stehen bleiben muss oder leer laufen muss, sondern weiter produziert werden kann, beispielsweise bis zum Ausfall einer weiteren Heizlampe oder bis zu routinemäßigen Wartungsarbeiten. Dem Bediener kann dann entsprechend eine Meldung ausgegeben werden und dieser kann sich dann auf den Austausch der defekten Heizlampe vorbereiten.

Bei einer bevorzugten Ausführungsform ist die Steuerungseinrichtung derart ausgebildet, dass sie bei Feststellung von mehr als einem Ausfall von Heizlampen und insbesondere bei Feststellung von mehr als einem Ausfall von Heizlampen innerhalb eines bestimmten Zeitintervals ein Anhalten der Transporteinrichtung bewirkt.

Mit der erfindungsgemäßen Erkennung multipler Heizlampenausfälle würde beim Ausfall nur einer Lampe wie bisher die Preformsperre schließen und die Maschine regulär leer gefahren. Sollten allerdings zwei oder mehrere Heizlampen ausfallen wird bevorzugt ein Notstopp ausgelöst, der die Maschine sofort zum Stillstand bringt. Ein möglicher Klumpen an Kunststoffvorformlingen würde nicht weiter durch die Maschine geschoben und auf diese Weise keinen weiteren Schaden anrichten.

Bevorzugt bewirkt die Steuerungseinrichtung weiterhin, dass bei einem Ausfall mehrerer Heizlampen die übrigen Heizlampen abgeschaltet werden. Bevorzugt wird jedoch eine eventuell vorhandene Kühlung der Heizlampen weiterhin aufrecht erhalten. Bei einer bevorzugten Ausführungsform ist es denkbar, dass bei einem Ausfall mehrerer Heizlampen und insbesondere für den Fall, dass ein Notstopp ausgelöst wurde, die Leistung der Ventilatoren, welche bevorzugt zur Kühlung des Ofens und/oder der Heizlampen verwendet werden, auf einem Maximum ihrer Leistung betrieben werden. Bevorzugt erfolgt eine Erhöhung der Leistung auf ein Maximum automatisch, sobald ein Ausfall einer oder mehrerer Heizlampen erfasst wird und/oder ein Notstopp ausgelöst wird. Dies bietet den Vorteil, dass eine Überhitzung der Heizlampen bei einem Stillstand der Maschine oder ein weiteres Zusammenschmelzen von herunter gefallenen Kunststoffvorformlingen verhindert oder zumindest abgeschwächt bzw. verzögert werden kann.

Bei einer bevorzugten Ausführungsform weist die Vorrichtung eine Erfassungseinrichtung auf, welche dazu geeignet und bestimmt ist, nach einem Anhalten der Transporteinrichtung infolge eines Ausfalls mehrere Heizlampen einen Eingriff eines Benutzers in die Maschine zu erfassen.

Auf diese Weise soll sichergestellt werden, dass ein Benutzer tatsächlich Wartungsarbeiten an der Maschine durchführt. So kann beispielsweise die Steuerungseinrichtung erfassen, ob eine Maschinenabdeckung über der Heizgasse geöffnet wurde. Es wäre jedoch auch möglich, Bewegungen des Benutzers zu erfassen. Das Quittieren einer Meldung und das Wiedereinschalten der Vorrichtung ist bevorzugt erst dann möglich, wenn die Heizeinrichtung geöffnet und die Heizeinrichtung kontrolliert wurde.

Die vorliegende Erfindung ist bevorzugt auch bei bestehenden Maschinen nachrüstbar und insbesondere auch durch eine Softwaremodifikation erreichbar.

Die vorliegende Erfindung ist weiterhin auf eine Anlage zum Herstellen von Kunststoffbehältnissen mit einer Vorrichtung der oben beschriebenen Art gerichtet sowie eine dieser Vorrichtung in der Transportrichtung der Kunststoffvorformlinge nachgeordneten Umformungseinrichtung zum Umformen von Kunststoffvorformlinge zu Kunststoffbehältnissen sowie einer Erfassungseinrichtung welche dazu geeignet und bestimmt ist, ein sich Loslösen eines Kunststoffvorformlings von einer Halteeinrichtung der Transporteinrichtung (direkt oder indirekt) zu erfassen.

Bevorzugt handelt es sich bei den oben beschriebenen Halteeinrichtungen um Haltedorne, die in die Mündungen der Kunststoffvorformlinge einführbar sind.

Bei einer bevorzugten Ausgestaltung wird neben der oben beschriebenen Erfassung über den Ausfall von Heizlampen auch noch der Ausfall bzw. das Herabfallen von Kunststoffvorformlingen zu einem späteren Zeitpunkt detektiert. So kann beispielsweise nach dem Ofen festgestellt werden, dass einzelne Kunststoffvorformlinge fehlen. Auch hier kann die Sperreinrichtung, welche den Einlauf von Kunststoffvorformlinge in die Erwärmungseinrichtung sperrt, aktiviert werden. Daneben kann in diesem Fall auch beispielsweise ein Warnhinweis einem Benutzer ausgegeben werden, mit dem dieser darauf hingewiesen wird, dass möglicherweise Kunststoffvorformlinge aus der Erwärmungseinrichtung entfernt werden müssen.

Die vorliegende Erfindung ist weiterhin auf ein Verfahren zum Erwärmen von Kunststoffvorformlingen gerichtet, wobei die Kunststoffvorformlinge entlang eines vorgegebenen Transportpfads von einer Transporteinrichtung transportiert werden und wobei die Transporteinrichtung ein umlaufendes Transportmittel und eine Vielzahl von Haltereinrichtungen aufweist, welche die Kunststoffvorformlinge halten und wobei eine Vielzahl von Heizeinrichtungen, welche stationär entlang des Transportpfands angeordnet ist die entlang des Transportpfads transportierten Kunststoffvorformlinge erwärmt und wobei die Heizeinrichtungen jeweils eine Vielzahl von Heizlampen aufweisen und wobei eine Erkennungseinrichtung der Vorrichtung einen Ausfall einer oder mehrere Heizlampen erfasst.

Erfindungsgemäß weist die Vorrichtung eine Steuerungseinrichtung auf, welche in Abhängigkeit von einer Anzahl der als ausgefallen erfassen Heizlampen die Vorrichtung steuert.

So ist es wie oben erwähnt möglich, dass falls in einem bestimmten Zeitintervall Ausfälle oder mehr Ausfälle erkannt werden, ein Notstopp der Maschine eingeleitet wird.

Besonders bevorzugt wird, auch mittels einer zweiten Erfassungseinrichtung ein Loslösen von Kunststoffvorformlinge von ihren Halteeinrichtungen erfasst. Besonders bevorzugt erfolgt dieses Erfassen nach der Erwärmungseinrichtung.

Bei einem bevorzugen Verfahren werden die Kunststoffvorformlinge vereinzelt transportiert. Besonders bevorzugt werden die Kunststoffvorformlinge bezüglich ihrer Längsrichtung gedreht, um so eine gleichmäßige Erwärmung zu erreichen.

Bei einem weiteren bevorzugten Verfahren wird beim Erfassen eines Ausfalls zweier oder mehreren Heizlampen die Transporteinrichtung angehalten und/oder ein Notstopp eingeleitet. Besonders bevorzugt wird dieser eingeleitet, wenn innerhalb eines vorbestimmten Zeitraums zwei oder mehrere Ausfälle von Heizlampen erkannt werden.

Bevorzugt ist dieser Zeitraum geringer als 10 Min., bevorzugt geringer als 8 Min., bevorzugt geringer als 6 Min., bevorzugt geringer als 4 Min., bevorzugt geringer als 2 Min., bevorzugt geringer als 1 Min, bevorzugt geringer als 30 Sek., bevorzugt geringer als 20 Sek., bevorzugt geringer als 10 Sek. und bevorzugt geringer als 5 Sek.

Besonders bevorzugt wird beim Feststellen des Ausfalls einer Heizlampe ein Einlauf der Kunststoffvorformlinge in die Erwärmungseinrichtung gesperrt. Dies kann insbesondere mit einer vor der Erwärmungseinrichtung liegenden Kunststoffvorformlingssperre durchgeführt werden. Daneben wäre es aber auch möglich, lediglich Warnhinweise auszugeben.

Besonders bevorzugt wird ein Ausfall einzelner Heizlampen anhand elektrischer Größen erfasst, insbesondere anhand von fließenden Strömen und/oder anliegenden Spannungen.

Bei einem weiteren bevorzugten Verfahren wird ein zeitlicher Abstand eines Ausfalls zweier oder mehrerer Heizlampen erfasst und bevorzugt ein Anhalten der Transporteinrichtung bewirkt, wenn dieser zeitliche Abstand einen vorgegebenen Grenzwert unterschreitet.

Besonders bevorzugt wird die ausgefallene Heizlampe identifiziert und/oder einer bestimmten Heizeinrichtung zugeordnet. So kann dem Benutzer genau mitgeteilt werden, welche Heizlampe welcher Heizeinrichtung ausgefallen ist, beispielsweise die dritte Heizlampe von oben aus der vierten Heizeinrichtung entlang des Transportpfads der Kunststoffvorformlinge.

Besonders bevorzugt bestimmt damit eine Erfassungseinrichtung eine Position der ausgefallen Heizlampe.

Weitere Vorteile und Ausführungsformen ergeben sich aus den beigefügten Zeichnung:
Dabei zeigen:
- Fig. 1: eine schematische Darstellung einer erfindungsgemäßen Vorrichtung;
- Fig. 2a,b: zwei Darstellungen von Heizgassen nach dem Stand der Technik;
- Fig. 3a, b: zwei Darstellungen von Heizgassen einer erfindungsgemäßen Vorrichtung;
- Fig. 4a: einen Bodenreflektor nach dem Stand der Technik;
- Fig. 4b: einen vorteilhaften Bodenreflektor; und
- Fig. 4c: einen weiteren vorteilhaften Bodenreflektor.

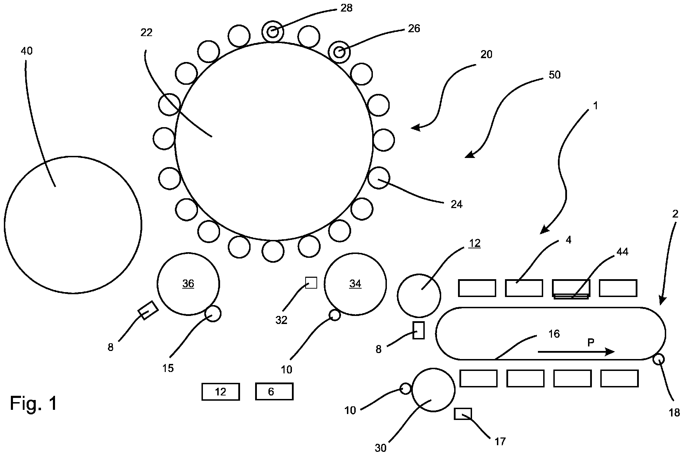

Fig. 1 zeigt eine Darstellung einer Anlage 50 zum Herstellen von Kunststoffbehältnissen, welche eine erfindungsgemäße Vorrichtung 1 zum Erwärmen von Kunststoffvorformlingen und eine dieser nachgeordnete Umformungseinrichtung 20 zum Umformen von Kunststoffvorformlingen zu Kunststoffbehältnissen aufweist.

Dabei weist die Umformungseinrichtung 20 zum Umformen von Kunststoffvorformlingen 10 zu Kunststoffbehältnissen 15 eine Transporteinrichtung 22, wie insbesondere ein Blasrad, an dem eine Vielzahl von Umformungsstationen 24 angeordnet sind. Diese Umformungsstationen weisen jeweils Blasformen 26 auf, innerhalb derer die Kunststoffvorformlinge zu den Kunststoffbehältnissen umgeformt werden. Daneben können die Umformungsstationen 24 jeweils Reckstangen aufweisen, welche in die Kunststoffvorformlinge einführbar sind und welche eine Dehnung der Kunststoffvorformlinge in deren Längsrichtung bewirken.

Das Bezugszeichen 32 kennzeichnet schematisch eine Erfassungsseinrichtung, welche erfasst, ob ein Kunststoffvorformling an einer Halteeinrichtung angeordnet ist.

Eine Zuführeinrichtung 34 führt die erwärmten Kunststoffvorformlinge der Umformungseinrichtung 20 zu und eine Abführeinrichtung 36 führt die gefertigten Kunststoffbehältnisse 15 von der Umformungseinrichtung 20 ab. Das Bezugszeichen 40 kennzeichnet eine Fülleinrichtung, welche dazu geeignet und bestimmt ist, die Kunststoffbehältnisse 15 mit einer Flüssigkeit und insbesondere einem Getränk zu befüllen.

Die Erwärmungseinrichtung 1 weist ebenfalls eine Transporteinrichtung 16 auf, welche hier als umlaufende Transportkette ausgebildet ist. An dieser Transporteinrichtung ist eine Vielzahl von Halteeinrichtungen 18 angeordnet, welche jeweils einen Kunststoffvorformling halten. Das Bezugszeichen 2 kennzeichnet die Transporteinrichtung in ihrer Gesamtheit. Die Kunststoffvorformlinge werden entlang eines Transportpfads P transportiert. Wie oben erwähnt, sind die Halteeinrichtungen 18 jeweils als Haltedorne ausgeführt, welche in die Kunststoffvorformlinge einführbar sind.

Das Bezugszeichen 4 kennzeichnet eine stationär angeordnete Heizeinrichtung. Bei dieser Ausgestaltung sind beispielsweise acht derartige Heizeinrichtungen entlang des Transportpfads P der Behältnisse angeordnet. Jede Heizeinrichtung weist eine Vielzahl von Heizlampen 44 auf (nur eine schematisch dargestellt). Diese erstrecken sich ebenfalls entlang des Transportpfads P.

Das Bezugszeichen 30 kennzeichnet einen Eintaktstern, der die Kunststoffvorformlinge 10 vereinzelt und der Transporteinrichtung 2 zuführt.

Das Bezugszeichen 12 kennzeichnet eine Sperreinrichtung, mit der die Zufuhr von Kunststoffvorformlingen zu der Transporteinrichtung 2 bzw. der Heizeinrichtung 1 gestoppt werden kann.

Das Bezugszeichen 6 kennzeichnet grob schematisch eine Erfassungseinrichtung, welche dazu geeignet und bestimmt ist, den Ausfall einzelner Heizlampen 44 zu erfassen. Das Bezugszeichen 12 kennzeichnet eine Steuerungseinrichtung, welche die Transporteinrichtung 2 und/oder die Erwärmungseinrichtung 1 in Abhängigkeit von von der Erfassungseinrichtung erfassten Signalen steuert.

Falls ein Ausfall einer einzelnen Heizlampe 44 detektiert wird, kann die Preformsperre 12 aktiviert werden und der weitere Einlauf von Kunststoffvorformlingen verhindert werden. Falls bei einem bestimmten zeitlichen Abstand der Ausfall zweier Heizlampen festgestellt wird, kann gleichzeitig die Transporteinrichtung 2 angehalten werden. Im Anschluss kann die Erwärmungseinrichtung geöffnet und ein eventueller Fehler beseitigt werden. Ein Wiederanfahren der Transporteinrichtung erst möglich, nachdem ein Fehler behoben wurde und/oder ein Benutzer die Reparatur oder die Wartung quittiert.

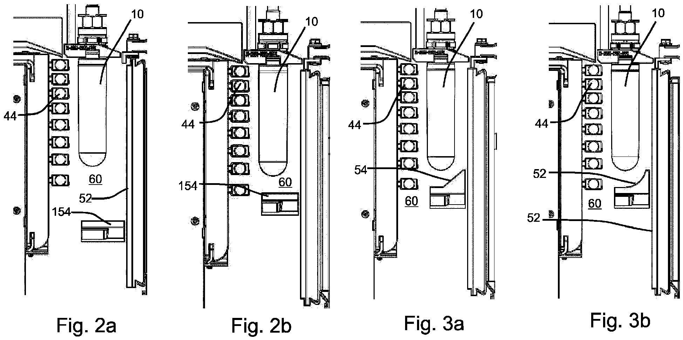

Die Fig. 2a und 2b zeigen zwei Darstellungen einer Heizgasse 60 nach dem Stand der Technik. Dabei sind mehrere Heizlampen 44 vorgesehen, die in der Längsrichtung der Kunststoffvorformlinge 10 übereinander angeordnet sind.

Das Bezugszeichen 52 kennzeichnet einen Gegenreflektor, der den Heizlampen bezogen auf die Kunststoffvorformlinge 10 gegenüberliegt. Ein Teil der von den Heizlampen ausgehenden Wärmestrahlung wird von diesem Gegenreflektor auf die Kunststoffvorformlinge reflektiert.

Das Bezugszeichen 154 kennzeichnet einen Bodenreflektor, der zur Erwärmung der Bodenbereich der Kunststoffvorformlinge dient. Allerdings entsteht hier oberhalb des Bodenreflektors ein erheblicher "Totraum", der nicht für die Erwärmung der Kunststoffvorformlinge genutzt werden kann

Bei der in Fig. 2b gezeigten Ausgestaltung ist die Heizgasse bereits deutlich verengt. Der Bodenreflektor 154 ist hier näher an die Kunststoffvorformlinge herangeführt. Auch hier entsteht oberhalb des Bodenreflektors auf der rechten Seite ein noch erheblicher Totraum

Fig. 3a zeigt eine Ausgestaltung mit einem erfindungsgemäßen Bodenreflektor in einer ersten Ausführungsform. Dieser Bodenreflektor weist hier einen schräg verlaufenden Abschnitt auf. Auf diese Weise kann der Bodenreflektor 54 näher an die Kunststoffvorformlinge 10 herangeführt werden. Bei dieser Ausgestaltung wird der in der Heizgasse 60 auftretende "Totraum" erheblich reduziert.

Insbesondere ist hier kleiner Abstand der Gegenkachel bzw. des Gegenreflektors zu den Kunststoffvorformlingen gegeben und auch ein kleiner Abstand der Kuppenbereiche der Kunststoffvorformlinge zu dem Bodenreflektor 54. Dieser kurze Abstand wird hier durch eine Kombination mehrerer ebener Flächen erreicht.

Fig. 3b zeigt eine weitere vorteilhafte Ausgestaltung des Bodenreflektors 54. Hier wird der verringerte Totraum durch eine Kombination einer ebenen horizontale Fläche und einer sphärische Fläche erreicht

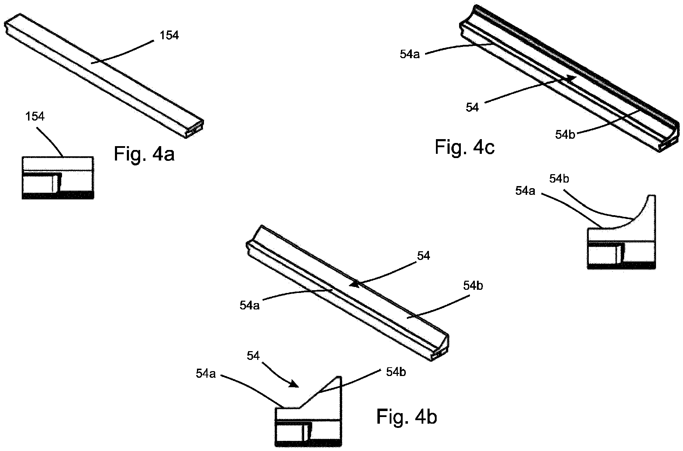

Fig. 4a zeigt eine Darstellung eines Bodenreflektors bzw. einer Bodenkachel nach dem Stand der Technik. Man erkennt, dass dessen Oberfläche hier vollständig eben verfläuft.

In Fig. 4b ist ein erfindungsgemäßer Bodenreflektor 54 in einer ersten Ausführungsform gezeigt. Bei dieser Ausgestaltung gezeigt. Bei dieser Ausgestaltung weist der Bodenreflektor einen ebenen Abschnitt 54a auf, an den sich ein schräger Abschnitt 54b anschließt. Dieser ebene Abschnitt ist hier ebenfalls geradlinig jedoch schräg ausgebildet. Der ebene Abschnitt 54a und der schräge Abschnitt 54b schließen bevorzugt einen Winkel ein, der kleiner ist als 180°, bevorzugt kleiner als 160°. Bevorzugt ist dieser Winkel jedoch größer als 90° und bevorzugt größer als 120°. Bevorzugt setzt sich also hier der Bodenreflektor aus einer Kombination mehrerer, hier zweier ebener Flächen zusammen.

Fig. 4c zeigt eine weitere vorteilhafte Ausgestaltung eine Bodenreflektors. Hier ist ein horizontaler Abschnitt 54a mit einem sphärischen Abschnitt 54b kombiniert. Insgesamt weist der Bodenreflektor hier eine konkave Gestalt auf.

Bevorzugt erstrecken sich die Bodenreflektoren entlang des Transportpfads der Kunststoffvorformlinge.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Erwärmen von Kunststoffvorformlingen (10) mit einer Transporteinrichtung (2), welche die Kunststoffvorformlinge entlang eines vorgegebenen Transportpfads transportiert, wobei die Transporteinrichtung ein umlaufendes Transportmittel (16) und eine Vielzahl von Halteeinrichtungen (18) zum Halten der Kunststoffvorformlinge aufweist, mit einer Vielzahl von Heizeinrichtungen (4), welche stationär entlang des Transportpfads (P) angeordnet sind, derart dass die entlang des Transportpfads transportierten Kunststoffvorformlinge durch diese Heizeinrichtungen (4) erwärmt werden, wobei die Heizeinrichtungen jeweils eine Vielzahl von Heizlampen (44) aufweisen, und die Vorrichtung (1) eine Erkennungseinrichtung (6) aufweist, welche dazu geeignet und bestimmt ist, einen Ausfall der Heizlampen (44) zu erfassen,
**dadurch gekennzeichnet, dass**
die Vorrichtung eine Steuerungseinrichtung (12) aufweist, welche dazu geeignet ist, die Vorrichtung in Abhängigkeit von einer Anzahl als ausgefallen erfasster Heizlampen (44) zu steuern.

2. Vorrichtung (1) nach Anspruch 1,
**dadurch gekennzeichnet, dass**
die Vorrichtung (1) eine Erfassungseinrichtung aufweist, welche einen zeitlichen Abstand zwischen den Ausfällen wenigstens zweier Heizlampen erfasst.

3. Vorrichtung (1) nach wenigstens einem der vorangegangenen Ansprüche,
**dadurch gekennzeichnet, dass**
die Vorrichtung eine erste Heizgasse aufweist, durch welche die Kunststoffvorformlinge während ihrer Erwärmung transportiert werden.

4. Vorrichtung (1) nach dem vorangegangenen Anspruch,
**dadurch gekennzeichnet, dass**
in der Heizgasse eine Vielzahl von Reflektoreinrichtungen angeordnet ist, welche dazu geeignet und bestimmt sind, Wärmestrahlung zu reflektieren, wobei bevorzugt auch Bodenreflektoreinrichtungen vorgesehen sind, welche unterhalb des zu transportierenden Kunststoffvorformlinge angeordnet sind.

5. Vorrichtung (1) nach dem vorangegangenen Anspruch,
**dadurch gekennzeichnet, dass**
die Bodenreflektoreinrichtungen wenigstens abschnittsweise einen von einem horizontalen Verlauf abweichenden Verlauf aufweisen.

6. Vorrichtung nach wenigstens einem der vorangegangenen Ansprüche,
**dadurch gekennzeichnet, dass**
die Bodenreflektoreinrichtungen einen ersten Abschnitt mit einem im Wesentlichen horizontalen Verlauf und einen zweiten Abschnitt mit dem von dem horizontalen Verlauf abweichenden Verlauf aufweisen.

7. Vorrichtung (1) nach wenigstens einem der vorangegangenen Ansprüche,
**dadurch gekennzeichnet, dass**
die Vorrichtung (1) eine Sperreinrichtung (17) aufweist, welche dazu geeignet und bestimmt ist, den Einlauf von Kunststoffvorformlingen in die Vorrichtung (1) zu verhindern und wobei bevorzugt die Sperreinrichtung von einer Steuerungseinrichtung angesteuert wird, sobald von der Erkennungseinrichtung der Ausfall von mindestens einer Heizlampe erfasst wird.

8. Vorrichtung (1) nach wenigstens einem der vorangegangenen Ansprüche,
**dadurch gekennzeichnet, dass**
die Steuerungseinrichtung derart ausgebildet ist, dass sie bei Feststellung von mehr als zwei Ausfällen von Heizlampen ein Anhalten der Transporteinrichtung bewirkt.

9. Vorrichtung (1) nach wenigstens einem der vorangegangenen Ansprüche,
**dadurch gekennzeichnet, dass**
die Vorrichtung eine Erfassungseinrichtung aufweist, welche dazu geeignet und bestimmt ist, nach einem Anhalten der Transporteinrichtung infolge eines Ausfalls mehrerer Heizlampen einen Eingriff eines Benutzers in die Maschine zu erfassen.

10. Anlage zum Herstellen von Kunststoffvorformlingen mit einer Vorrichtung (1) nach wenigstens einem der vorangegangenen Ansprüche und einer dieser Vorrichtung (1) in der Transportrichtung der Kunststoffvorformlinge nachgeordneten Umformungsvorrichtung zum Umformen von Kunststoffvorformlingen zu Kunststoffbehältnissen und mit einer Erfassungseinrichtung, welche dazu geeignet und bestimmt ist, ein sich Loslösen eines Kunststoffvorformlings von einer Halteeinrichtung der Transporteinrichtung zu erfassen.

11. Verfahren zum Erwärmen von Kunststoffvorformlingen wobei die Kunststoffvorformlinge entlang eines vorgegebenen Transportpfads von einer Transporteinrichtung transportiert werden, wobei die Transporteinrichtung ein umlaufendes Transportmittel (16) und eine Vielzahl von Halteeinrichtungen (18) aufweist, welche die Kunststoffvorformlinge halten und wobei eine Vielzahl von Heizeinrichtungen (4), welche stationär entlang des Transportpfads (P) angeordnet sind, die entlang des Transportpfads transportierten Kunststoffvorformlinge erwärmen, wobei die Heizeinrichtungen jeweils eine Vielzahl von Heizlampen (44) aufweisen, und wobei eine Erkennungseinrichtung (6) der Vorrichtung einen Ausfall von Heizlampen (44) erfasst,
**dadurch gekennzeichnet, dass**
die Vorrichtung eine Steuerungseinrichtung (12) aufweist, welche in Abhängigkeit von einer Anzahl der als ausgefallen erfassten Heizlampen (44) die Vorrichtung steuert.

12. Verfahren nach Anspruch 8,
**dadurch gekennzeichnet, dass**
bei Erfassen eines Ausfalls zweier oder mehrerer Heizlampen die Transporteinrichtung angehalten wird.

13. Verfahren nach wenigstens einem der vorangegangenen Ansprüche,
**dadurch gekennzeichnet, dass**
ein zeitlicher Abstand eines Ausfalls zweier oder mehrerer Heizlampen erfasst wird und bevorzugt ein Anhalten der Transporteinrichtung bewirkt wird, wenn dieser zeitliche Abstand einen vorgegebenen Grenzwert unterschreitet.

14. Verfahren nach wenigstens einem der vorangegangenen Ansprüche,
**dadurch gekennzeichnet, dass**
die Erfassungseinrichtung eine Position der ausgefallenen Heizlampe bestimmt.
